(19) **Europäisches Patentamt / European Patent Office / Office européen des brevets**

(11) **EP 4 787 063 A1**

(12) **EUROPEAN PATENT APPLICATION**

(43) Date of publication:
**05.08.2026 Bulletin 2026/32**

(21) Application number: 25382071.6

(22) Date of filing: **03.02.2025**

(51) International Patent Classification (IPC):
**G02C 7/06** *(2006.01)*

(52) Cooperative Patent Classification (CPC):
**G02C 7/027; G02C 7/061**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicants:
• **Rodenstock GmbH**
  **80687 München (DE)**

• **Indo Optical, S.L.U**
  **08174 Sant Cugat del Vallés (ES)**

(72) Inventors:
• **Espínola, Manuel**
  **08210 Barberà del Vallès (ES)**
• **Kerner, Patrick**
  **82041 Oberhaching (DE)**

(74) Representative: **Herrero & Asociados, S.L.**
  **Edificio Aqua - Calle Agustín de Foxá, 4-10, 2ºA
  28036 Madrid (ES)**

(54) **MANUFACTURING METHOD FOR OPTIMIZED LENS FOR VISION**

(57) A method for manufacturing an ophthalmic lens, the method comprising receiving frame data corresponding to a complete refraction order, defining in the ophthalmic lens a vision area (12) that provides essential optical correction, establishing in the ophthalmic lens an aesthetic area (13) surrounding the vision area contour (12) for thickness and distortion optimization, wherein the aesthetic area (13) is configured to maintain local optical power near zero; and generating in the ophthalmic lens a manufacturing area (14), extending beyond the aesthetic area (13) to accommodate production tooling.

**FIG. 3**

EP 4 787 063 A1

## Description

### Object of the invention

The present invention relates to a method for designing ophthalmic lenses that improves the aesthetic performance, user advantages like lenses thickness and the number of resources required upon current design techniques by addressing the unique visual behavior of individual users, streamlining the ordering process, and enhancing manufacturability.

### Background of the invention

Current lens optimization methods are focused in two main problems, optical performance and thickness optimization. Usually these two features have a little influence between each other as for instance described by the Lensmaker's equation and, once fixed the optical properties of the lens by usually determining a prescription surface, the thickness is optimized by getting closer the object side and eye side surfaces of the lens considering mechanical constrains like a minimum edge or center thickness. In this process, the optical properties of the lens are just slightly tunned to adapt the optical power to the optimized thickness value.

In terms of optical performance optimization, there are different methods to use considering eye models, types of optimization and degrees of personalization, but in terms of thickness optimization, less techniques have been used and usually are processes very independent from the optical performance optimization. In terms of thickness optimization, refined methods that provide improvements respect the standard one where surfaces are not significantly changed are lenticularization techniques. However, these methods do not adequately address user-specific visual behavior, reliance on frame data for design, or challenges in manufacturability. These limitations contribute to reduced adaptability, complex production processes, and potential visual aberrations.

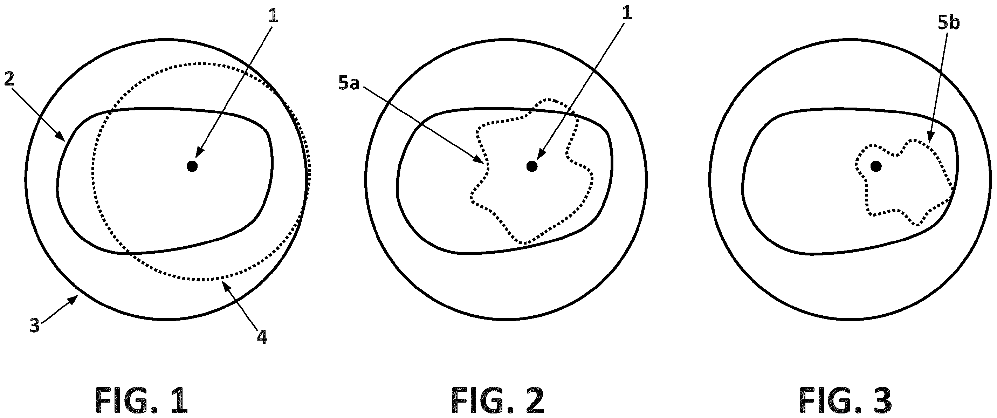

In particular, the patent ES2323935B1 describes a lenticularization process wherein a better thickness optimization is reached by applying minimum edge thickness on the frame shape (instead of the usually used englobing circle/ellipse. The transition is performed from the shape of the frame (2) (as shown in Figure 1) towards the contour of the semi-finished blank (3) (as shown in Figure 1). The process described in this patent provides thickness advantages with respect to common non-lenticularization methods, but it is independent from the optical performance of the lens and the production methods used in lens manufacturing, being a partial solution to a complex process that must be seen as a whole.

An very initial approach to consider optical features in lenticularization is publication ES2427859A1, which discloses a visual field of 30 degrees or higher (as shown in Figure 1, reference (4)) centered on the eye (as shown in Figure 1 and other figures, reference (1)) considered for introducing the lenticularization within the temporal zone of the frame. The aim of this process is also to get thinner lenses both for positive (center thickness) and negative lenses (edge thickness) In this case, the consideration of this fixed visual field is mainly used for very high tilted lenses, it is used a standard value and it introduces uncontrolled aberration within the frame that generate very high aberrations to the user that can disturb vision. Furthermore, this patent does not consider either the production process limiting the overall performance and generating issues in the manufacturing process

These approaches are a geometrical solution to a thickness optimization process that does not consider the personal way in which a user looks through the lens, known as visual behavior, and implies the use of the user's frame for the design process. These approaches also generate geometry that may difficult some steps in the production process.

The present invention provides a solution that overcomes the mentioned drawbacks of existing approaches.

### Description of the invention

An aspect of the invention is a method for manufacturing an ophthalmic lens, the method comprising:

- providing surface manufacturing data based on an order;
- providing frame contour data corresponding to the order if available or generating frame contour data;
- providing a lens blank;
- determining for the ophthalmic lens a vision area within a vision contour that provides optical correction according to the order;
- determining for the ophthalmic lens a frame contour according to the order;
- determining the surface data of the ophthalmic lens in a functional area (13, 13.a) surrounding the vision area (12) and within the frame contour (2) with thickness and/or distortion minimization, and/or
- determining the surface data of the ophthalmic lens in an outer functional area (13, 13.b) outside the vision area (12) and outside the frame contour (2) with manufacturing time minimization; and/or

- determining a manufacturing area (14), extending beyond the functional area (13) to accommodate manufacturing tooling.

The surface manufacturing data comprises all data required for manufacturing the front and/or back surface of an ophthalmic lens from a lens blank. The surface manufacturing data can be based on refraction data and/or prescription data of a user included in the order. The refraction data can include data for single vision glasses or progressive glasses or bifocal glasses.

The frame contour data comprises data defining the position and/or orientation of the frame contour relative to the lens blank. The frame contour can be included into the order.

The lens blank is a piece of glass, particularly polymer glass, which may have a front surface with a specific curvature (then also called semi-finished lens blank).

The determination of the vision area and/or the vision contour may include computing a plurality of points where the user is gazing through the ophthalmic lens, and thus defining the vision area including the plurality of points. The computing might include a table lookup in order to retrieve statistical values of the vision area. The computing might preferably based on individual measurements of the eyes movement of the user corresponding to the order.

The determination of the frame contour based on the frame contour data may include providing individual frame shape or frame contour data with the order. The frame contour data might also be computed and/or estimated from frame data like table look up based on frame model specifications. In case the frame contour data is not present or empty or invalid in the order, the frame contour might be estimated in another way or be set to a default value.

The determination of the surface data of the ophthalmic lens in the functional area can be dependent on the situation whether the part of the functional area is within the frame contour but outside the vision area (alternative 1: inner functional area) or the part is outside the frame contour, i.e. an area that will be cut off when edging the ophthalmic lens into the frame (alternative 2: outer functional area).

The surface data for alternative 2 can be determined based on minimizing the manufacturing time. However, the ophthalmic lens might be manufactured to have a minimum thickness also in the outer functional area.

The surface data for alternative 1 can be determined based on minimizing the aberrations and/or optical power and/or first derivative and/or second derivative of the surface in the inner functional area. Thus, the viewing comfort can be enhanced although the surface has not to be adapted strictly to the refraction data of the order. The determination of the manufacturing area extending beyond the functional area is dependent on the size of the lens blank and the working area of the tooling machine. Within the manufacturing are the tool can be moved based on surface data which is determined by minimizing the tool time and/or the length of the tool path.

In case the frame contour data can be omitted, e.g. if not known, the method for manufacturing an ophthalmic lens can also comprise the following steps:

- providing surface manufacturing data based on an order;
- providing a lens blank;
- determining for the ophthalmic lens a vision area within a vision contour that provides optical correction according to the order;
- determining the surface data of the ophthalmic lens in a functional area surrounding the vision area with thickness and/or distortion minimization, and/or
- determining a manufacturing area, extending beyond the functional area to accommodate manufacturing tooling and to minimize manufacturing time and resources, respectively.

Preferably the vision area contour is based on at least one of the following:

- an user-specific gaze angle distribution,
- a standard field-of-view projection,
- frame contour data,
- fitting height and/or
- centrational data including pupillary distance and frame bridge dimensions.

Preferably, the surface manufacturing data includes visual behavior data determined by the distribution of gaze angles. More preferably, the determination of the distribution of gaze angles comprises the measurement of individual gaze angles of a user under a plurality of viewing situations.

The measurement data of the gaze angles and/or a comprehensive data set or model of the gaze angles of the user can be part of the corresponding order. The gaze angles can be measured with an eye tracker while showing the user different pictures in order to simulate different viewing situations such as reading, driving car, viewing at a computer, etc. Thus, it can be determined whether the user is moving the head or the eyes in order to adapt to different viewing situations.

In consequences a statistical distribution of gazing angles can be computed.

The present invention introduces a method for designing ophthalmic lenses that address key limitations in the current lens design and manufacturing processes. The proposed approach significantly improves on four main fronts: thickness optimization considering user-specific visual optimization, simplified ordering, enhanced manufacturability and resource savings.

The proposed method reduces reliance on frame shapes, allowing for more flexible ordering and better manufacturing outcomes. The present invention includes a new process for designing an optical lens with optimized thickness, minimal distortions, and improved manufacturability, divided into three key areas: vision, functional, and manufacturing.

User-Specific Visual Optimization

The present invention addresses visual limitations by recognizing that each person's visual behavior is unique, affecting how they utilize different regions of the lens. Conventional lenses assume a fixed field of view, typically a 30-degree semi-angle, which does not reflect the true gaze distribution observed in practice. Studies indicate that most users' effective gaze angles are within an 18-degree range, meaning that optimizing for a 30-degree field results in unnecessary visual zones, affecting lens thickness and clarity.

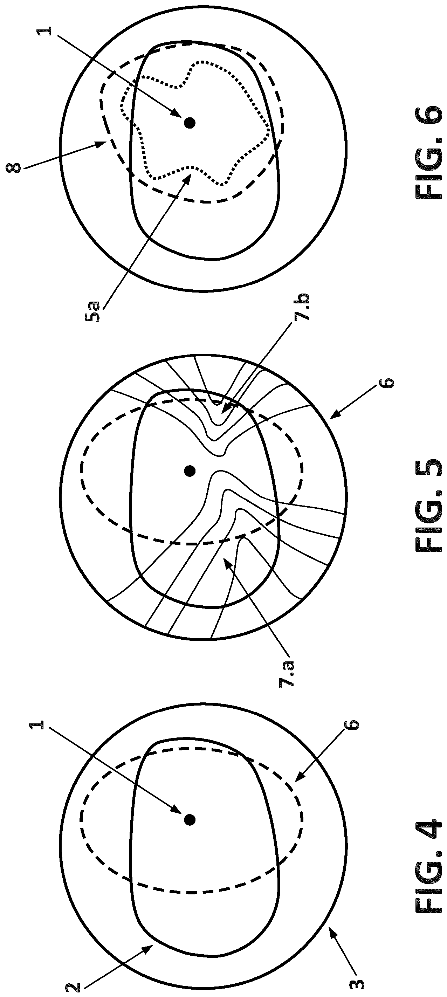

The proposed lens design method customizes the vision area based on the actual angular distribution of a user's gaze, forming a customized vision zone on the lens which can be measured or estimated by different methods. If specific visual behavior data is available, this zone is mapped to cover the measured gaze angles (dotted line 5a in Figure 2 and 5b in Figure 3). If unavailable, the design defaults to a circular field of view preferably between 18° and 30°, and adjusted to the projection of the intended gaze cone onto the lens in its position of wear. Additionally, peripheral aberrations inherent to changes in the curvature of the surface are minimized by defining preferably neutral power zones in surrounding areas out of the visual contour, reducing distortions that lead to effects like swimming. This approach also permits lenticularization within the visual zone, ensuring both optical clarity and aesthetic appeal by limiting distortions in regions peripheral to the user's line of sight.

Streamlined Ordering Process

Traditional fully optimized lens design requires precise frame shape data to ensure the lens maintains proper optical correction throughout the frame boundary as well as mechanical constraints regarding minimal thickness. However, this need for exact frame contours restricts the ordering process, as it demands additional input from opticians. The present invention resolves this by defining the vision zone without depending on the frame shape.

In cases where frame data is unavailable, the vision zone is instead derived from simpler measurements like fitting height (the vertical distance between the eye and the lower frame rim). This parameter, in combination with common data such as pupillary distance and bridge width, allows estimation of a suitable contour for the vision zone. This contour can be fine-tuned based on approximated frame dimensions, enabling the design to adapt to a range of frames without requiring detailed input. By using these approximations, the present invention reduces ordering complexity and enhances flexibility in lens customization, removing the need for precise frame contour data while ensuring that essential optical properties are preserved.

Enhanced Manufacturability

The present invention also improves manufacturability by addressing the challenges faced in lens thickness optimization and surface shaping, particularly during the cutting and coating stages. Traditional methods generate complex transition zones from the lens surface to the frame, which introduce unnecessary high-curvature points and heights that complicate the production process, slow down manufacturing, and may introduce unwanted aberrations within the frame boundary.

To overcome these issues, the present invention defines both a functional area, extending from the visual contour to the final glass shape, and a manufacturing area extending beyond the functional zone of the lens, specifically designed for optimal manufacturability. In the first area, characteristics of the final glass like shape and diameter are optimized for handling and manufacturing purposes, focusing on saving tool dependence and scrap. Advantageously, the lens diameter selection process is simplified by limiting the final lens shapes to a discrete set of diameters, e.g. the diameters of the available semi-finished lenses such as 65, 70, and 75 mm, streamlining handling and tooling needs across production stages. In the second area, surface features are adjusted solely for smoothness, avoiding abrupt curvature changes, reducing high points, and improving manufacturability in sense of manufacturing speed and tool usage.,.

The present invention also refines the cutting process by predefining the entire lens surface, eliminating the need for additional extrapolation by surface generators. This reduces manufacturing artifacts and provides a surface tailored for efficient cutting and coating processes, enhancing the quality and throughput of production.

<u>Main steps of the proposed invention</u>

Contour Definition: Based on a complete prescription, the invention establishes contours for at least three zones:

- Vision Area: Where optical correction is optimized based on the user's specific visual behavior or general gaze assumptions, ensuring the clarity of the primary viewing region.
- Functional Area: Surrounding the vision area, where lens' properties focus on optimizing thickness and distortion to enhance aesthetics without compromising lens quality and usage.
- Manufacturing Area: Extending beyond the functional zone, optimized for production ease, featuring smooth curvatures to support efficient cutting and coating.

Vision Optimization: The method is configured to estimate thickness within the vision area and optimizes the prescription surface as well as the position and orientation of the object and eye side surfaces to each other to fulfill optical and thickness requirements. The method can be configured to change curvature smoothly from the vision area to the functional and manufacturing areas, maintaining continuous differentiability to ensure manufacturability without introducing distortions. The method can also be configured to change curvature rapidly on a predefined contour (8.b) inside the functional area to introduce distortions to visualize the predefined contour (8.b).

Thickness Adjustment: If thickness constraints are unmet, the method is configured to iteratively adjust the vision area thickness requirements until all constraints are satisfied.

Final Surface Preparation: The lens surface is modified within the manufacturing area, using interpolation techniques to ensure a continuously differentiable surface optimized for production needs being free of considering optical and mechanical constrains.

This invention offers a streamlined, adaptable process for lens design that optimizes for visual clarity, simplifies the ordering process, and supports efficient manufacturing, providing substantial improvements in the functionality and aesthetics of ophthalmic lenses.

**Brief description of the drawings**

For a better understanding of the above explanation and for the sole purpose of providing an example, some non-limiting drawings are included that schematically depict a practical embodiment.

Figure 1 shows a frame shape of existing solutions.

Figures 2 and 3 show optical lenses having personalized visual contours.

Figure 4 shows an optical lens showing the projection into a tilted lens of a standard circular shape considered as visual field

Figure 5 shows an optical lens having peripheral aberrations in the surroundings of the progression corridor.

Figures 6 and 7 show an optical lens with an adjustable visual contour.

Figure 8 shows standardized lens shapes to streamline handling.

Figure 9 shows an adjustable visual contour which redefines the vision zone independently of the frame.

Figure 10 shows a set of contours that determines at least three areas.

Figure 11 shows an aesthetic area defined by the intersection of the shape of the frame (2) and the free contour.

Figure 12 shows thickness optimization with or without frame data, using information like fitting height.

Figure 13 shows thickness optimization with or without frame data, using information like fitting height, pupillary distance, and bridge dimensions, or approximations of frame size.

**Description of the detailed embodiment**

The invention improves ophthalmic lens design by addressing limitations in user-specific visual behavior, simplifying the ordering process, and enhancing manufacturability. The figures support various aspects of the invention as described below.

The invention provides a detailed method for designing optical lens geometries, addressing key challenges in visual behavior accuracy, ordering flexibility, and manufacturability. The design approach improves thickness optimization and aesthetic quality, while simplifying the manufacturing process, with specific reference to Figures and reference numbers throughout the description.

Identified Problems

1. Visual Limitations:

Current Problem: The use of limited zones of a lens is not considered in conventional designs which do not distinguish different useful zones within a zone defined by the frame or the glass diameter. State of the art designs assume a fixed circular visual field with a 30-degree semi-angle, which does not accurately reflect real user behavior or the lens's wear position. This limitation affects lens thickness optimization and does not take full advantage of the possibility of considering a given vision zone to optimize lens characteristics.

Solution: The proposed invention customizes the effective vision zone based on individual visual behavior, such as gaze angle distributions. This vision zone depends on the user way of looking, on the age or even with the power of the lens and its diverging light capabilities, but actual maximum gaze angles are usually under 18 degrees semi-angle cones (as shown in studies). This personalized zone is defined by the visual contour and depending on different factors can be wider (5a) or narrower (5b) shown as a dotted line in Figures 2 and 3, adapting to various usage needs by allowing variable lens zones, in contrast to the usually used standard circular shape (4) as shown in Figure 1 which in fact, when projected into the real position of the lens which is tilted in front of the eye, becomes an effective elliptical shape (6) as shown in Figure 4 and is not taken into account.

In the case that the lens of the invention is a progressive addition lenses, peripheral aberrations exists in the surroundings of the progression corridor (as illustrated in Figure 5, temporal area (7.a) and nasal area (7.b)). These aberrations are not optically useful for the wearer and appear as a result of the progression geometry. In the case that these aberrations are not within the visual lens zone used by the wearer, they can be also advantageously addressed by decreasing distortion within this zone. This reduces the "swimming effect" and enhances user adaptation. The lens can also incorporate neutral power zones, creating an aesthetically improved edge where lenticularization is applied without affecting visual quality.

2. Ordering Process:

a. Current Problem: Traditional methods require precise frame dimensions, making the ordering process complex and reliant on optician data accuracy.

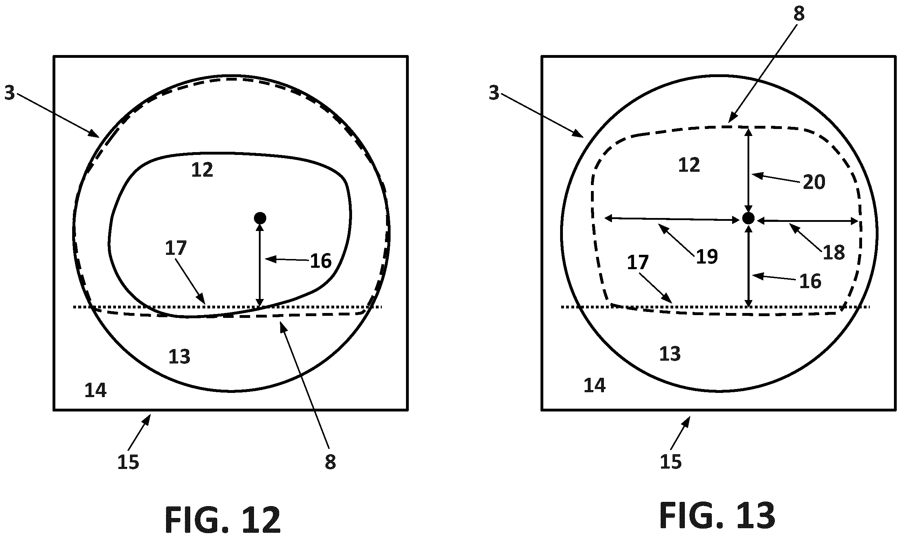

b. Solution: By introducing an adjustable visual contour (8), shown in Figures 6 to 9, which sets the vision zone independently of the frame, the need for detailed frame data is reduced. This contour accommodates optical and thickness optimization with or without frame data, using information like fitting height (16) shown in figures 12 and 13, pupillary distance, and bridge dimensions, or approximations of frame size (e.g., nasal distance (18) and temporal distance (19), vertical upper distance (20), see figure 13). These approximated values are based both in some minimum recommended sizes (like the distance from the eye to the top of the rim set preferably to 8 mm) or estimated shapes based on historical data analysis or generated by machine learning technics like linear or non-linear regression models.

3. Manufacturability:

a. Current Problem: Complex surface transitions due to frame-based thickness optimization cause high curvature changes and surface heights that slow manufacturing, especially during cutting phase. Furthermore, the current use of circular and elliptical fitted surfaces with lot of different sizes for thickness reduction purposes, forces the manufacturing process to use a very big number of handling processes and tools, especially in the coating phase.

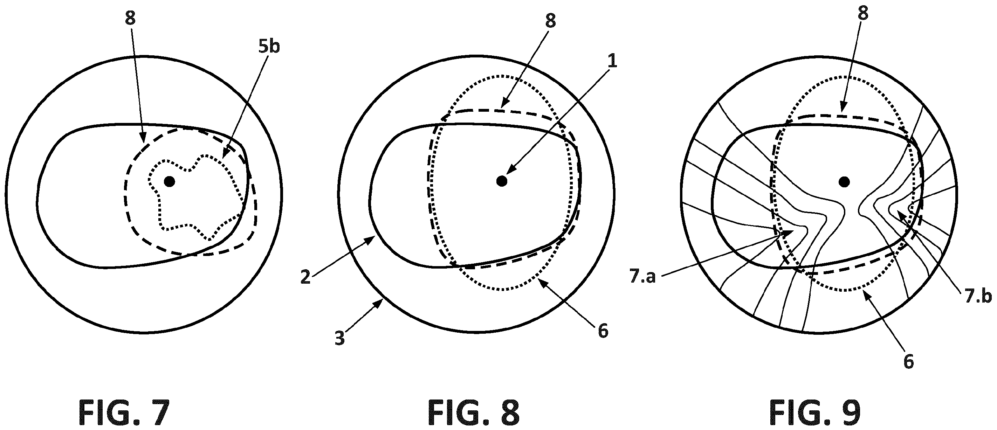

b. Solution: The invention standardizes lens shapes (3) (e.g., the diameters of the available semi-finished lenses like 65, 70, and 75 mm) as shown in Figure 8 to streamline handling. By designing the lens surface for manufacturability, minimizing height spikes and curvatures, this method ensures smoother and cost-effective manufacturing processes.

Step 1: Establishment of lens contours

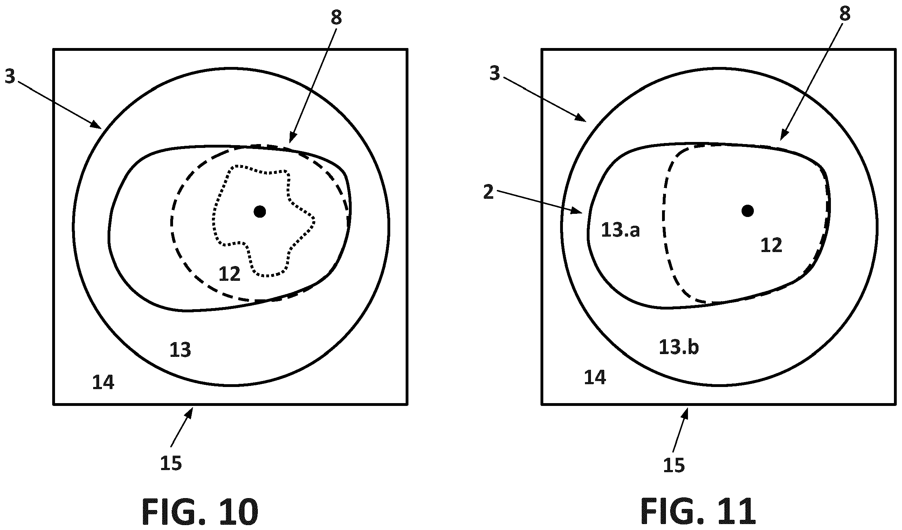

A first step of the invention creates a set of contours that determines at least three areas (see Figure 10) which are determined by:

The vision area (12) within free contour (8) shown in figure 10. The vision area (12) provides essential optical correction. The free contour (8) is a free-form outline that optimally matches the user's visual behavior data and the frame data. The vision area (12) is defined as the intersection of the area determined by the visual behavior and the area of the frame and estimated frame, respectively.

Area determined by the visual behavior:

a) If visual behavior data is available, the contour defining the area considered is set to encompass the user's gaze angles distribution (see personalized zone (5a) in Figure 2).

b) If no user data is available, the area considered defaults to a field of view centered at the eye with a semi-angle comprised between 15 and 60 degrees and preferably between 18 and 30 degrees. and projected on the lens in its wear position (see standard circular shape (6) in Figure1).

Area of the frame or estimated frame:

c) When a frame shape is specified, the contour defining the area considered is the frame shape (2)..

d) If fitting height and centering data is provided,(16) in Figure 13, the contour defining the area considered may be defined as the inner contour of the union of lens shape and fitting height line (17).

e) If only centering data is provided (pupillary distance and bridge), the contour defining the area considered aligns based on estimated nasal distance (18), temporal distance (19), and vertical upper distance (20). Preferably these distances are estimated based on historical analysis of produced orders as

a. Horizontal size: the nasal distance (18) from the eye to the frame can be estimated by centering data. Then, assuming that eye centration usually falls in the nasal part of the lens, estimate the temporal distance (19) preferably between 1 and 6/5 of the nasal distance.

b. Vertical size: Assuming that vertical eye centration falls usually in the upper side of the lens, the upper distance (20) can be estimated preferably between the range of minimum 8 mm and between 1 and 3/5 of the fitting height.

Also machine learning methods like linear or non-linear regressions models can be trained with historical orders containing frame data including the frame shape to estimate the horizontal and vertical size from the centering data.

Functional area (13) shown in figure 10 between the free contour (8) and the contour of the semi-finished blank (3): This area focuses on reducing thickness and/or aberrations.

For lenses with frame data, one of the possible embodiments of the invention is not only to consider the already defined contours 8 and 3 in Figure 10 but creating a new process where splitting functional area in two sub-areas that allow a better distinction between zones where visual distortions have higher or less importance during the optimization process. In this specific embodiment, the functional area (13) is redefined by the shape of the frame (2), producing an internal functional area (13.a) shown in Figure 11 where distortions and thickness constrains are considered and a new additional functional area or outer functional area(13.b) where the design process only takes into account a range of manufacturable thickness and curvatures without taking care of created distortions. In the outer functional area (13.b) the contour (8.b) can be defined freely in general. It is useful to determine the position of the contour (8.b) according to the thickness profile of the lens if the lens thickness shall be optimized. For instance, the thickness isolines with thickness equal to the minimal and maximal thickness on the frame and the contour determined by the middle of the frame shape (2) and semi-finished blank (3) can be used to determine the contour (8.b) as the most inner contour of the union of these three contours.

In the absence of a frame, the functional area (13) can be shaped independently to maintain manufacturability and visual smoothness.

Manufacturing area (14) shown in figure 10 and 11 between the contour of the semi-finished blank (3) and contour (15). The contour (15) can be determined by the boundary of the needed data of the manufacturing tools like cutting tool for instance the boundary given in the surface definition files. This outer manufacturing area (14) includes only manufacturing features and is optimized for production without optical or thickness constraints. Preferably, within this area minimization of surface's curvature changes and height in the corners are applied. With this approach, by minimizing the curvature change, the use of the different tooling available at the generators are optimized, minimizing the number of tools used and prioritizing the use of bigger radius cutting tools that permit to process the material extraction faster than with small radius cutting tools. In the case of minimizing the height at the corners, it helps to optimize the trajectory of the tool spending less time during the approximation of the tool to the piece to cut.

Step 2: Optimization of Surface Design

Vision area (12) optimization:

Using thickness constraints inside and/or on the free contour (8) based on order data, the vision area (12) is optimized for thickness and visual requirements. Machine learning techniques like linear of non-linear regressions can be applicable to estimate the thickness constraints inside and/or on the free contour (8) by using data of precalculated lenses fulfilling visual and thickness requirements.

A prescription surface including the position and orientation of the object and eye side surfaces to each other is generated within the free contour (8), providing the required optical corrections.

Functional Transition Zones:

If no frame is given, the surface is interpolated between the free contour (8) and the contour of the semi-finished blank (3) using sphere arcs which fulfill the thickness constraints ensuring smooth transitions. For instance, the interpolation can be given by the interpolation formula for the radial directions r

$$h(r,\phi) = \left(\frac{r_e - r}{r_e - r_0}\right)^n f(r,\phi) + \left(1 - \left(\frac{r_e - r}{r_e - r_0}\right)^n\right) g(r,\phi)$$

where $n$ is the interpolation order, $r_0$ and $r_e$ is the starting point and the end point of the interpolation, $f,g$ are the functions describing the surfaces e.g. $f$ is the surface defined by the requirements inside the contour (8) and $g$ is the sphere arc. To obtain a smooth transition at the starting point $r_0$ it is useful to choose $f(r_0,\phi) = g(r_0,\phi)$ for all angles $\phi$ such that

$$h(r,\phi) = f(r_0,\phi) + f'(r_0,\phi)(r - r_0) + O((r - r_0)^2)$$

If a frame is provided, there are two main embodiments for the invention. If the main goal is to optimize thickness considering the possibility of introducing aberrations into the frame, further surface modifications are made from the free contour (8) to the shape of the frame (2) in the inner functional area (13.a) and then from the shape of the frame (2) to the semi-finished blank (3) in the outer functional area (13.b), minimizing curvature for easier manufacturability. In another embodiment, due to prioritization of visual features, the contour (8b) can be introduced.

To visualize contour (8.b) in addition to interpolation with sphere arcs a parabolic arc introducing well defined curvature changes on the contour (8.b) are superposed in the outer functional and manufacturing area outside the contour (8.b). The parameter of the parabolic arc can be adjusted such that the curvature changes lie in a defined interval and thickness constraints are fulfilled if possible. For instance, the interval of the curvature changes may be determined by the minimal distortion which shall be visible and/or by the manufacturability, e.g. curvatures are intended to be within the range of +70 (concave) and -130 (convex) diopters, and preferably between +30 and -30 diopters. In addition to the parabolic arc, an arc defined by a cubic function may be superposed in part of the outer functional area and manufacturing area defined by a contour (x) to control the surface height in the aesthetic and manufacturing area without introducing further distortions. For instance, the contour (x) can be determined by inner contour of the union of the contour of extremal thickness between the contour (8.b) and contour (15) if the extremum exists and the middle of contour (8.b) and contour (15). The surfaces are superposed by adding pointwise the functions describing the surfaces.

Manufacturing Surface Adjustments:

The outer surface area, from the contour of the semi-finished blank (3) to contour (15), is adjusted to ensure optimal manufacturing conditions, minimizing curvatures and height changes that would hinder cutting. By finalizing this surface, the lens design aligns with practical manufacturing needs, producing a smooth, easily manipulated lens. During this adjustment of the outer phase, curvatures are intended to be within the range of +70 (concave) and -130 (convex) diopters, and preferably between +30 and -30 diopters, whereas surface heigh is preferably set to be less than 15 mm if the curvature change allows.

Evaluation and Iteration:

After the initial surface design, thickness constraints are checked across the semi-finished blank (3). If these constraints are unmet, adjustments within the free contour (8) are repeated from Step 2.

Surface Continuity for Production:

From the contour of the semi-finished blank (3) to contour (15), interpolation techniques create a consistently smooth surface for production, which is at least continuously differentiable, minimizing any high-variation regions that could affect manufacturing speed or quality.

Summary of Design Advantages

The described method provides a customized approach to ophthalmic lens design, including:

- User-Specific Vision Zones: Optimizing vision zones based on actual gaze behavior (or default parameters when data is unavailable) for more precise and efficient thickness management.
- Reduced Data Requirements in Ordering: Simplifying the ordering process by allowing frame-optional designs, especially when using fitting height or centering data to approximate frame contour.
- Enhanced Manufacturability: Standardizing lens diameters and optimizing manufacturing zones to improve handling and streamline production stages, especially coating and cutting.

Through the described zones and contour-based adjustments, this invention results in lenses that offer superior thickness management, aesthetic improvement, and manufacturability without compromising essential visual performance.

**Claims**

1. A method for manufacturing an ophthalmic lens, the method comprising:

   - providing surface manufacturing data based on an order;
   - providing frame contour (2) data corresponding to the order;
   - providing a lens blank (3);
   - determining for the ophthalmic lens a vision area (12) within a vision contour (8) that provides optical correction according to the order;
   - determining for the ophthalmic lens a frame contour (2) according to the order;
   - determining the surface data of the ophthalmic lens in a functional area (13, 13.a) surrounding the vision area (12) and within the frame contour (2) with thickness and/or distortion minimization; and/or
   - determining the surface data of the ophthalmic lens in an outer functional area (13, 13.b) outside the vision area (12) and outside the frame contour (2) with manufacturing time minimization; and/or
   - determining a manufacturing area (14), extending beyond the functional area (13) to accommodate manufacturing tooling.

2. The method according to claim 1, wherein in the ophthalmic lens the vision area contour (8) is based on at least one of the following:

   - a user-specific gaze angle distribution,
   - a standard field-of-view projection,
   - frame contour (2) data,
   - fitting height (16), and/or
   - centrational data including pupillary distance and frame bridge dimensions.

3. The method according to claim 1 or 2, wherein the surface manufacturing data includes visual behavior data determined by the distribution of gaze angles.

4. The method according to claim 3, wherein determination of the distribution of gaze angles comprises the measurement of individual gaze angles of a user under a plurality of viewing situations.

5. The method according to anyone of the previous claims, wherein if frame contour data is not provided, the vision contour (8) is established by intersecting a semi-finished blank (3) shape with a horizontal line representing the fitting height (16).

6. The method according to anyone of the previous claims, further comprising a step to estimate thickness conditions within the defined vision area contour (8) using regression analysis or machine learning techniques.

7. The method according to any of the previous claims, further comprises including in the functional area (13) zones specifically designed to mitigate peripheral aberrations induced by progressive addition lenses, thereby expanding the effective usable vision area contour (8) and reducing the swimming effect.

8. The method according to anyone of the previous claims, wherein the vision contour (8) is defined by an angular distribution smaller than 18 degrees for the maximum gaze angle for adjusting to user-specific data to optimize visual comfort.

9. The method according to anyone of the previous claims, wherein the functional area (13) adjustment uses interpolation techniques that ensure the resulting surface maintains continuous differentiability and/or avoids abrupt transitions.

10. The method according to anyone of the previous claims, wherein the functional area (13) adjustment uses superposition techniques that ensure the resulting surface to have well defined distortions on a predefined contour and controlled surface height.

11. The method according to anyone of the previous claims, including a step to modify a concave surface in the manufacturing area (14), while preserving the structural integrity of the lens.

12. An ophthalmic lens manufactured by the method of anyone of claims 1 to 11.

13. The ophthalmic lens according to claim 12, wherein the vision contour (8) comprises a non-circular free-form shape determined by real or approximated visual.

14. The ophthalmic lens according to claim 12 or 13, wherein the functional area (13) comprises a minimum thickness threshold of at least 0.35 mm and/or smooth curvature transitions and/or well-defined distortion on a predefined contour.

15. The ophthalmic lens according to claims 12 to 14, wherein the manufacturing area (14) comprises a surface optimized for processing equipment, preventing excessive curvature spikes and ensuring continuous differentiability.

**FIG. 1**                    **FIG. 2**                    **FIG. 3**

FIG. 4          FIG. 5          FIG. 6

EP 4 787 063 A1

**FIG. 7**　　　　**FIG. 8**　　　　**FIG. 9**

FIG. 11

FIG. 10

FIG. 13

FIG. 12

Europäisches Patentamt

European Patent Office

Office européen des brevets

**EUROPEAN SEARCH REPORT**

Application Number

EP 25 38 2071

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/176901 A1 (ESPINOLA ESTEPA MANEL [ES] ET AL) 26 June 2014 (2014-06-26) | 1-4,6-8, 12-15 | INV. G02C7/06 |
| Y | * figures 3, 4, 8, 11, 13 * <br> * paragraphs [0001], [0011], [0017], [0022], [0038], [0046], [0048] - [0050] * | 2-4,6-8 | |
| Y | DARRYL J MEISTER ET AL: "Progress in the spectacle correction of presbyopia. Part 2: Modern progressive lens technologies", CLINICAL AND EXPERIMENTAL OPTOMETRY, vol. 91, no. 3, 31 December 2008 (2008-12-31), pages 251-264, XP007913239, ISSN: 0816-4622 [retrieved on 2008-02-17] <br> * figures 5, 10, 12 * <br> * page 5, column 1, line 3 * <br> * page 7, column 1, lines 41-44 * <br> * page 8, column 2, line 3 * <br> * page 9, column 1, lines 4-8 * | 2-4,6-8 | |
| X | EP 0 880 046 B1 (SEIKO EPSON CORP [JP]) 17 March 2010 (2010-03-17) | 12-15 | TECHNICAL FIELDS SEARCHED (IPC) G02C |
| Y | * figure 13 * <br> * paragraphs [0022], [0034], [0040], [0041] * | 2-4,6-8 | |
| X | US 2017/371178 A1 (CRESPO DANIEL [US] ET AL) 28 December 2017 (2017-12-28) | 12-15 | |
| Y | * figure 2 * <br> * paragraph [0023] * | 2-4,6-8 | |
| X | US 2003/090625 A1 (IZUMITANI YUKIHIRO [JP] ET AL) 15 May 2003 (2003-05-15) | 12-15 | |
| Y | * figures 34, 36 * | 2-4,6-8 | |

The present search report has been drawn up for all claims

| Place of search | Date of completion of the search | Examiner |
|---|---|---|
| The Hague | 1 July 2025 | de Lajarte, Gilles |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

2-4, 6-8, 12-15(completely); 1(partially)

☐ The present supplementary European search report has been drawn up for those parts of the European patent application which relate to the invention first mentioned in the claims (Rule 164 (1) EPC).

17

**LACK OF UNITY OF INVENTION**
**SHEET B**

The Search Division considers that the present European patent application does not comply with the requirements of unity of invention and relates to several inventions or groups of inventions, namely:

```
1. claims: 2-4, 6-8, 12-15(completely); 1(partially)

   Wearer-optimized performances within a well-defined frame
   contour
                          ---

2. claims: 9-11(completely); 1(partially)

   Manufacturability improvement of the area outside of a
   well-defined frame contour
                          ---

3. claims: 5(completely); 1(partially)

   Wearer-optimized performances without a well-defined frame
   contour
                          ---
```

## ANNEX TO THE EUROPEAN SEARCH REPORT
## ON EUROPEAN PATENT APPLICATION NO.

EP 25 38 2071

This annex lists the patent family members relating to the patent documents cited in the above-mentioned European search report.
The members are as contained in the European Patent Office EDP file on
The European Patent Office is in no way liable for these particulars which are merely given for the purpose of information.

01-07-2025

| Patent document cited in search report | | | Publication date | Patent family member(s) | | Publication date |
|---|---|---|---|---|---|---|
| US 2014176901 | A1 | | 26-06-2014 | CA 2894956 A1 | | 26-06-2014 |
| | | | | ES 2427859 A1 | | 04-11-2013 |
| | | | | US 2014176901 A1 | | 26-06-2014 |
| | | | | WO 2014096495 A1 | | 26-06-2014 |
| EP 0880046 | B1 | | 17-03-2010 | EP 0880046 A1 | | 25-11-1998 |
| | | | | JP 3944914 B2 | | 18-07-2007 |
| | | | | US 6199983 B1 | | 13-03-2001 |
| | | | | WO 9816862 A1 | | 23-04-1998 |
| US 2017371178 | A1 | | 28-12-2017 | EP 3474723 A1 | | 01-05-2019 |
| | | | | US 2017371178 A1 | | 28-12-2017 |
| | | | | WO 2017222835 A1 | | 28-12-2017 |
| US 2003090625 | A1 | | 15-05-2003 | AU 753161 B2 | | 10-10-2002 |
| | | | | CN 1264474 A | | 23-08-2000 |
| | | | | EP 1011006 A1 | | 21-06-2000 |
| | | | | HK 1027168 A1 | | 05-01-2001 |
| | | | | JP 3537831 B2 | | 14-06-2004 |
| | | | | KR 20010012590 A | | 15-02-2001 |
| | | | | TW 362161 B | | 21-06-1999 |
| | | | | US 6533418 B1 | | 18-03-2003 |
| | | | | US 2003090625 A1 | | 15-05-2003 |
| | | | | WO 9852092 A1 | | 19-11-1998 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- ES 2323935 B1
- ES 2427859 A1